(19) Europäisches Patentamt

European Patent Office

Office européen des brevets

(11) **EP 1 003 978 B1**

(12) **EUROPEAN PATENT SPECIFICATION**

(45) Date of publication and mention
of the grant of the patent:
**23.12.2009 Bulletin 2009/52**

(21) Application number: **98940956.0**

(22) Date of filing: **17.08.1998**

(51) Int Cl.:
*F16B 31/02* (2006.01)  *G01B 7/16* (2006.01)
*G01N 21/00* (2006.01)  *G01N 27/00* (2006.01)
*H01F 5/00* (2006.01)

(86) International application number:
**PCT/US1998/017060**

(87) International publication number:
**WO 1999/009327 (25.02.1999 Gazette 1999/08)**

(54) **LOAD INDICATING FASTENER SYSTEMS METHOD AND APPARATUS**

VERFAHREN UND VORRICHTUNG FÜR BELASTUNGSANZEIGENDE
BEFESTIFUNGSELEMENTE

PROCEDE ET DISPOSITIF SE RAPPORTANT A DES SYSTEMES DE FIXATION INDIQUANT UNE
CHARGE

(84) Designated Contracting States:
**AT BE CH CY DE DK ES FI FR GB GR IE IT LI LU
MC NL PT SE**
Designated Extension States:
**RO**

(30) Priority: **19.08.1997 GB 9717566**
**01.09.1997 GB 9718332**

(43) Date of publication of application:
**31.05.2000 Bulletin 2000/22**

(73) Proprietors:
• **Clarke, Ronald C.**
**Phoenix, AZ 85013 (US)**
• **Clarke, Philomena**
**Phoenix, AZ 85013 (US)**

(72) Inventor: **CENEY, Stanley**
**Wombourne,**
**Wolverhampton WV5 0JW (GB)**

(74) Representative: **Hauck Patent- und Rechtsanwälte**
**Schwanthalerstrasse 106**
**80339 München (DE)**

(56) References cited:
**DE-A1- 4 410 722      US-A- 3 886 840**
**US-A- 4 294 122       US-A- 4 899 591**
**US-A- 5 386 733       US-A- 5 388 463**
**US-A- 5 392 654       US-A- 5 691 815**
**US-E- R E30 183**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### Field Of The Invention

This invention relates to load indicating fastener systems that are adapted to indicate loads to which they are subjected and, more specifically, to a non-contact electronic device, such as a reactance capacitor, which measures a changing air gap or form produced when a fastening system is strained, and, more specifically, to a non-contact image processing or laser device, which measures a changing air gap or form produced when a fastening system is strained.

### Background

It is desirable that applied fasteners systems should be accurately tightened to the designed load levels in order to ensure the structural integrity of the bolted joint. It is well known that indicating strain gives a true representation of the load induced in the fastener systems. Torque wrenches are commonly used for tightening fasteners to predetermined torque levels, but they are subject to unpredictable friction so that the strain produced can be widely inaccurate. In other words, controlling torque will not lead to accurate loading of a fastener system.

### Prior Contact-Type Fastener Extension Measuring Devices

Some measuring devices, for instance linear transducers, need to make physical contact to be functional. These contact methods are inherently difficult to use in the field. The measurements of strain are extremely small and any surface contamination (corrosion, dirt, natural abrasives, in service damage, etc.) leads to significant errors. Accordingly, it is an object of the present invention to measure strain by using a non-contact device and method.

### Prior Non-Contact-Type Fastener Extension Measuring Devices and Methods

Previous non-contact-type devices and methods of measuring the extension of a fastener under strain have utilized electrical components within each individual fastener, typically a bolt or a stud. These earlier methods have a number of significant problems associated with them.

One problem with previous non-contacting measuring devices is that it is prohibitively expensive to instrument each individual fastener with electrical components. Additionally, the integrated instrumentation compromises the integrity of the fastener and is not suitable for the rugged environments of many applications. Accordingly it is an object of the present invention is to provide a cost effective load indicating fastener in which the fastener itself carries no electric parts.

A further problem with previous non-contacting measuring devices is that they typically require complex modification of the fastener making the manufacturing process difficult. Accordingly, it is an object of the present invention to measure the fastener extension using a simple device and method which require only a slight modification to the fastener system which is readily and easily incorporated during the manufacturing process.

US 5,392,654 shows a rock bolt load sensor assembly for use to determine the load on a nut screwed onto a bolt. US RE 30 183 shows a transducer that consists of a resonant circuit and is placed within a bolt. Strains resulting from stress in the bolt vary the gap between two plates of a capacitor.

A bolt head which measures and maintains preload is described in US 3,886,840. Therein, the bolt provides an indication of preload and continuous load thereafter wherein the bolt head has recesses on both sides thereof leaving a central ring which functions as a diaphragm spring and deflects along the bolt axis as a function of load. In one example, an indicator pin is mounted in or forms part of the ring so as to deflect with the ring, moving through a passage in a fixed indicator washer or ring which closes the top recess and which permits a ready determination, by comparison of the relative positions of pin and indicator ring, of bolt preload. In a further example, an indicator pin, which deflects with the ring, and a transverse buckled column are employed to increase sensitivity as the column and pin move in opposite directions with change in load.

### Summary Of The Invention

Set forth below is a brief summary of the invention which achieves the foregoing and other objects and provides the foregoing and hereafter stated benefits and advantages in accordance with the structure, function and results of the present invention as embodied and broadly described herein. Applicant's invention includes the apparatus described herein which achieves the objects and benefits of the present invention.

According to the present invention a load indicating fastener system is provided which comprises a body to which strain is applied when the fastener is in use, a load sensing means having parts arranged for relative movement in response to change in length or form of the body or an associated washer design under an applied strain, and a separate non-contact gap measuring device, such as an image processing device, or such as a laser device, (hereinafter collectively and/or separately referred to as "a non-contact gap measuring device") which, when secured adjacent to the fastener, registers the said relative movement of the moving parts by a non-contact method.

The fastener system may be in the form of a bolt or stud, a nut and washers, or it may take other forms. In the form of a bolt, the body of the fastener comprises a head and shank which may be of substantially standard form. Similarly, in the form of a stud, the body comprises a shank which may be of substantially standard form. In either of said forms, a washer may incorporate the means of indicating the moving parts being sensed by a separate non-contact gap measuring device of the type described above. In the case of bolt or stud, the load-sensing element responds to a change in length of the shank under the applied strain. In the case of the washer, the load sensing element senses the change of shape in the form of the washer under applied strain. Conveniently, the gap measuring device can be secured at the bolt head, thread end, stud end, or washer where it can easily be secured when the fastener system is in use.

The load-sensing element indicates changes in the length of the body of the fastener, or changes in the form of the washer, or changes in the form of the bolt head as the fastener system is being secured and when the fastener system has been secured. Thus, as the fastener system is being secured, the applied loads will be registered by the non-contact gap measuring device which will indicate when the fastener system reaches a required working load. The non-contact gap measuring device can be attached to the fastener system and obtain a measurement which can be displayed on a computer monitor 24 or other display unit. This measurement can be used during the tightening process. The measurement can be used after the initial tightening to inspect for any changes in the initial strain condition.

Actual fastener system loads may be indicated on the monitor 24 and an electrical output can be used to control power tightening tools (not shown) or indicate a warning when the fastener system desired load has been achieved.

The load sensing means may be arranged to register applied loads up to the fastener system material proof loads, (proof load is the maximum load that can be sustained before there is a permanent change from its original dimensions.)

The creation of a gap that changes with changing strain can be achieved in various ways. In the present invention the means to create this changing gap comprise a load-sensing element disposed in the direction in which strain is applied to the body when the fastener system is in use, and has an anchorage part. The anchorage part is rigidly anchored to the body at a part of the body in which there is movement when the fastener is applied for use. An air gap between the non-contact gap measuring device and the element widens or reduces depending on whether the fastener is being secured or looses strain. The non-contact gap measuring device reacts by measuring the air gap and registers the applied load on a monitor 24. The load-sensing element may be made of the same material, or at least has the same coefficient of thermal expansion, as the material of the body. This way, changing temperatures at which the fastener system may be used will not affect the functioning of the load-sensing element.

The load-sensing element may be a solid diameter bar, one end providing the anchorage part, the other free end to move relative to the fastener. At least part of the load sensing element may be located in a blind bore or passage in the body. When the load sensing means comprises an element, as described above, it may be provided by an insert fitted into the blind end portion of the bore or passage. The anchorage may be anchored into the base of the bore or passage. The bore or passage may have a smaller base portion in which the anchorage part is anchored. Conveniently the non-contact gap measuring device is located at or near the free end of such a bore or passage. There may be direct anchorage of the element to the body, for example by welding, threading or adhesive bonding, or the element may be anchored to the base, which is suitably fixed to the body. The base of the bore or passage may be in the form of a close interference bore into which the element is pressed to provide a secure anchorage.

The load-sensing element may be arranged to operate over a given range of changes of length of the body under applied strain. This will usually be by elongation of the body from the unloaded condition up to the material proof load. When the load is applied to strain the body, the load sensing element moves into the body away from the zero datum (datum means the fixed part on the fastener upper head face that does notmove). The non-contact gap measuring device attaches to the body and measures the difference between the datum point (reference point or form) on the body and the load sensing element, and the non-contact gap measuring device is calibrated to indicate load.

For a given elongation under the proof load a required original length can be calculated from:

$$\underline{\text{Original length E x A x extension}}$$
$$\underline{\text{load}}$$

Where:
E = Youngs Modulus for the material of the body.
A = Cross section area of the body.

For different cross sectional areas and/or proof loads the required original length will vary. For a range of fastener sizes, proof load sensing elements of different lengths may be provided, as required. However, it is generally easier and more economical for production to provide load sensing element means for the fasteners in accordance with the invention with load sensing elements of a standard length and to compensate for the differences by the non-contact gap measuring device.

It is possible for the present invention to give a highly accurate indication of the fastener system applied loads. The indication from the non-contact gap measuring device of the applied loads enables a person to see readily what the applied loading on the fastener system is. This can be from a portable battery operated monitor/ display, which may be hand held and connected to the non-contact gap measuring unit by an umbilical connector.

The fastener system may be manufactured without being substantially more expensive than a conventional fastener or similar type. For example, the bores may be pierced during originally manufacturing process. Further more, a conventional fastener may be readily adapted to include the load sensing means.

The load sensing may also be arranged to register applied loads up to the proof load for the material by a load-indicating washer. The washer is designed to deflect under the fastener system strain and the non-contact gap measuring device measures the deflection against a static part of the washer/bolt. The non-contact gap measuring devices are calibrated to indicate the fastener system load as explained above.

The load sensing may be arranged to register applied loads up to the proof load of the material by measuring the deflection of a specially designed bolt head when the bolt is under strain, the measurement being taken from two parts which are moving relative to each other when the bolt is under strain. The non-contact gap measuring device is calibrated to indicate the fastener system load as explained above.

A method used for calculating a change in the gap may be measurement by reactance which is

$$\text{Capacitive reactance} = \frac{1}{2\pi FC}$$

$$\text{and capacitance} = \frac{D \times A}{G}$$

$$\text{Hence reactance} = \frac{G}{2\pi FDA}$$

Displacement = change in gap
Where F = Frequency (hertz)
C = capacitance (farads)
D = dielectric constant ( air = 1)
A= area (inch squared)
G = gap (inch)

Set forth below are some of the advantages of the present invention:

1. A non-contact gap measuring device comprising all of the necessary electronics measures a changing air gap or form produced when a fastening system is strained without physically coming into contact with the moving parts being measured.

2. Measuring by non-contact minimizes error from contamination or the environment.

3. The distance being measured is determined from the average mean value of the entire surface being measured, which is not the case for contact methods.

4. The apparatus is cost effective because the cost of the fastener will not change significantly, if at all, since only slight modifications need to be made to the fastener to implement the invention.

5. The fastener carries no electric parts.

6. The design modifications to the fastener system will be incorporated during its manufacturing process.

7. The fastener system is suited for even the most rugged applications.

8. Displacement is directly proportional to reactance and will give a linear graph.

9. The fastener system load indication is highly accurate and repeatable.

10. The system is portable and can be used in the field to readily check and easily read the applied loads.

**Brief Description of the Drawings**

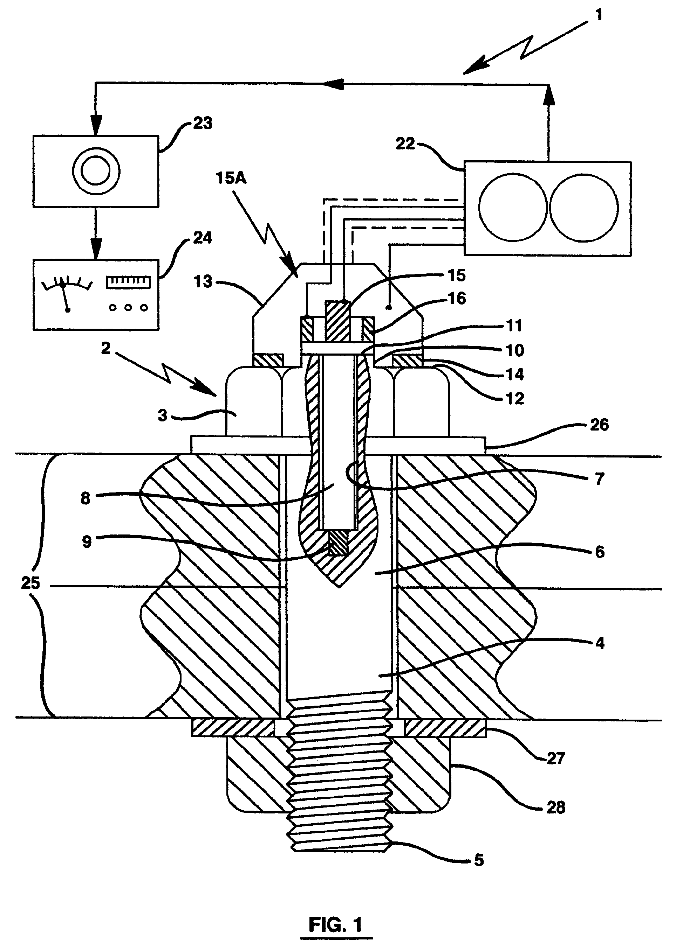

Fig.1 is a partly sectioned elevational view showing the modifications to a fastener and the measuring element embodied into it for measuring the gap. Also shown is the portable reactance capacitor head with a ring type reactance capacitor and a cylindrical type reactance capacitor. The ring type reactance capacitor measures the gap between the face of the ring type reactance capacitor and the fixed part of the fastener. The cylindrical type reactance capacitor measures the gap between the face of cylindrical type reactance and the upper free end of the measuring element. The non-contact gap measuring device computes the difference between the free end of the measuring element and the datum plane (reference). The non-contact gap measuring device computes the difference between the two measurements, and the result is accurately calibrated to indicate clamping load generated by the fastener when it is in use.

Fig. 2 is a view similar to Fig. 1 showing the fastener described in Fig. 1 without the portable head.

Fig. 3 is a view similar to Fig. 1 showing an alternative option for measuring the gap by using only a cylindrical type reactance capacitor. The portable head is secured to the fixed part of the fastener datum face. The cylindrical type reactance capacitor measures the gap between the face of the cylindrical type reactance and the upper free end of the surface of the measuring element. The non-contact gap measuring device computes the different measurement of the gap and is calibrated to indicate clamping load induced by the fastener when it is in use.

Fig. 4 is a view similar to Fig. 1 showing a specially designed washer that deflects when the fastener system is under strain and an non-contact gap measuring device for measuring the gap. The reactance capacitor non-contact gap measuring device, when secured to the bolted joint, measures the gap between the face of the reactance capacitor and the part being measured on the washer.

Fig. 5 is a view similar to Fig. 1 showing a specially designed washer that deforms the head of the fastener so that two different parts of the head can be measured relative to each other by the reactance capacitor non-contact gap measuring device when the fastener is under strain.

Fig. 6 is a view similar to Fig. 1 showing a form of the present invention with an image processing or laser type gap measuring device fitted for use.

Fig. 7 is a view similar to Fig. 1 showing a fastener head which is modified to deflect under load when the fastener is subjected to a tensile force.

Fig.8 is a view similar to Fig. 1 showing a further modification having a specially designed washer that deflects and also deflects the fastener head under load when the fastener is subjected to a tensile force.

Fig.9 is a view similar to Fig. 1 showing a further modification in which the specially designed washer of Fig. 9 deflects under load when the fastener is subjected to a tensile force and the change in the gap is measured from the side of the system.

## Detailed Description Of The Preferred Embodiment

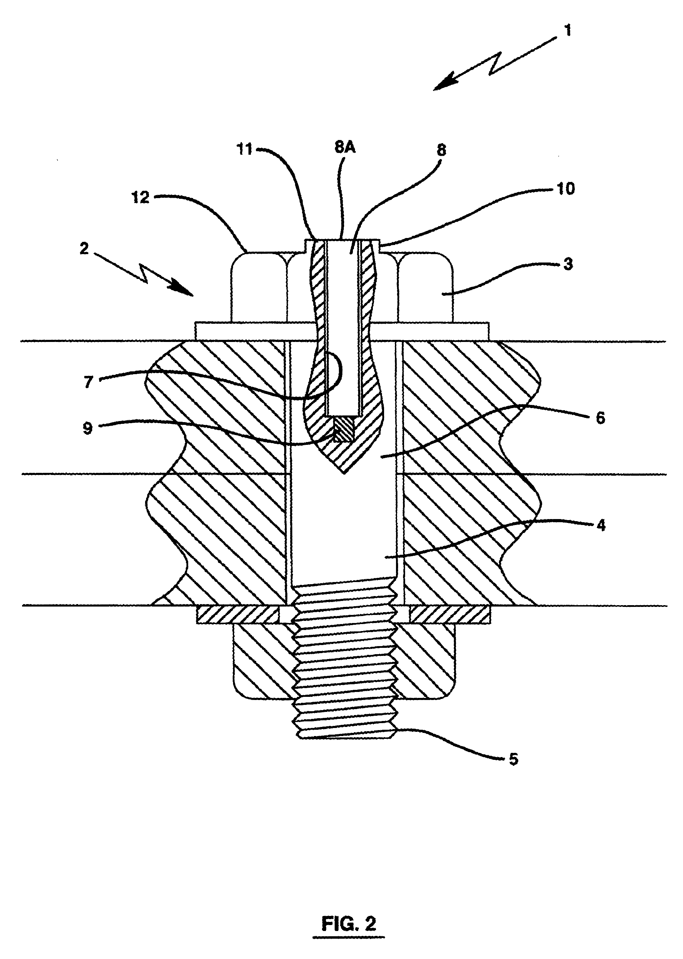

Referring now to the drawings in detail, as in Figs. 1,2, there is shown an example of a load indicating fastener in bolted joint 25 in which in order to measure the changing gap between the faces of the reactance capacitors 15, 16 and shank 4, there is provided a bolt fastener system 1 having a metal body 2 made from steel, for example, which includes a hexagon head 3 and a shank 4, the shank 4 having an externally screw-threaded portion 5 spaced from the head 3 by a plain cylindrical portion 6, washers 26, 27, a nut 28, and a reactance capacitor 15A which, in the Fig. 1 example, includes the cylindrical reactance capacitor 15 and the ring reactance capacitor 16 for measuring the changing gap.

Drilled into the body 2, co-axially with its rotational axis, is a blind bore 7 which extends from the top of the head 3, through the head 3 and into the shank 4 for approximately a quarter the length of the plain cylindrical portion 6. The closed inner end of the bore 7 is a close tolerance smaller counterbore 9, which serves as an anchor for measuring element 8. Supported in the bore 7 is a load sensing means, which comprises the measuring element 8, made from the same material as the body 2. The element 8 is anchored in the bore 7 at counterbore 9. The anchorage could, for example, be pressed into bore 9 or may be secured therein by any of various types of fixing.

The upper surface of head 3 is machined to form a location spigot 10, upper datum face 11 and a lower face 12. The element 8 free end 8A is ground flush with the head 3 upper datum face 11. The element 8 responds to loads applied to the shank 4 by nut 28 when the fastener is in use. The response is related to the extension of the shank 4 under applied loads. It is appropriate for the element 8 to sense applied loads and to indicate said loads up to the proof load for the material of the body 2. Therefore, the element 8 is arranged to respond to the extension of the shank 4 up to the extension caused by the proof load. For this to be achieved the element 8 is set in bore 7 of the body such that the anchorage in counterbore 9 moves the element 8 into or out of the body 2 depending on the load being induced into the shank 4. Therefore, the element 8 free end 8A moves relative to the head 3 upper datum surface 11 depending upon whether the shank 4 is being loaded or unloaded. When the shank 4 is free from load, the element 8 and the head upper datum surface 11 are flush which indicates no load in the shank 4. Because the shank 4 material obeys Hookes Law, the gap created between the element 8 free end 8A and the head 3 upper datum surface 11 can be calibrated to indicate load by the portable head measuring device 13 up to the proof load of the shank 4 materials. Provided the proof load is not exceeded, the load indication will be always repeatable.

The portable head 13 carries the reactance capacitors 15,16 and is constructed to accurately locate onto the head 3 locating spigot 10. The portable head 13 is secured to the head 3 by a magnet 14 mounted on the bottom of portable head 13, or portable head 13 may be secured to head 3 by other known means. The ring type reactance capacitor 16 measures the gap between the face 11B of the capacitor 16 and the head 3 upper datum surface 11. The cylindrical type reactance capacitor 15 measures the gap between the surface 11A of the capacitor 15 and the free end 8A of element 8. The said gaps between the said surfaces and the two capacitors 15,16 are compared by the non-contact gap measuring device and associated electronics which include reactance capacitors 15,16, capacitance amplifier 22, signal conditioner 23, and display 24 and which are calibrated to indicate load that the shank 4 is subjected to during its use.

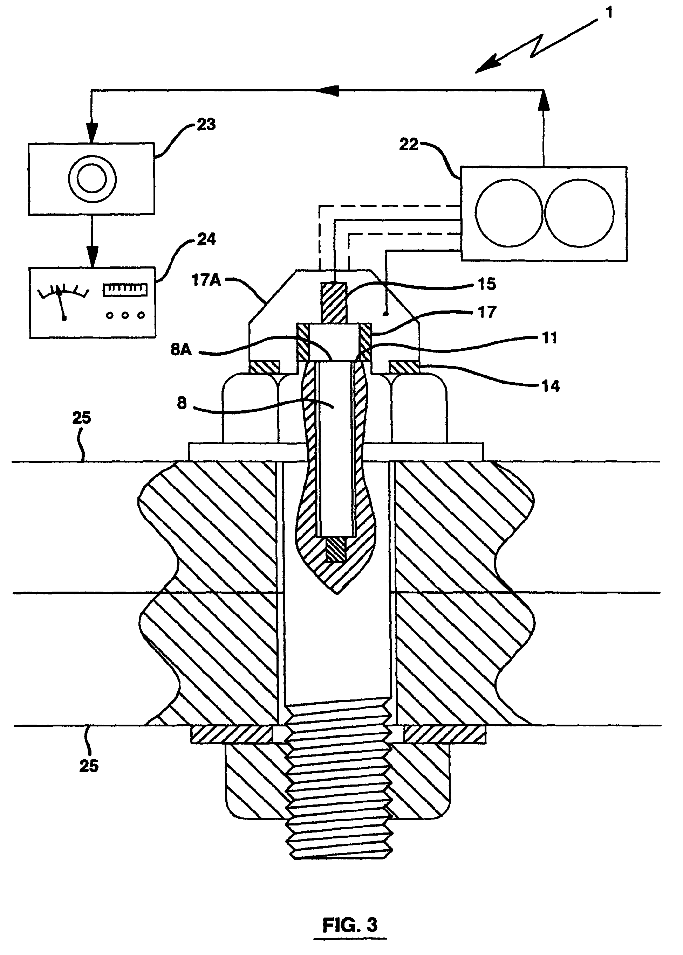

The ring type reactance capacitor 16 of Fig. 1 is replaced in Fig. 3 by a solid metal disc 17 which is mounted in portable head 17A and which abuts the head 3 upper datum face 11. The reactance capacitor 15 still operates in the same way as described for Fig. 1. All other details are as described for Fig. 1. The reactance capacitor 15 compares the difference between the datum surface 11 and the movement of element 8 when the system is in use.

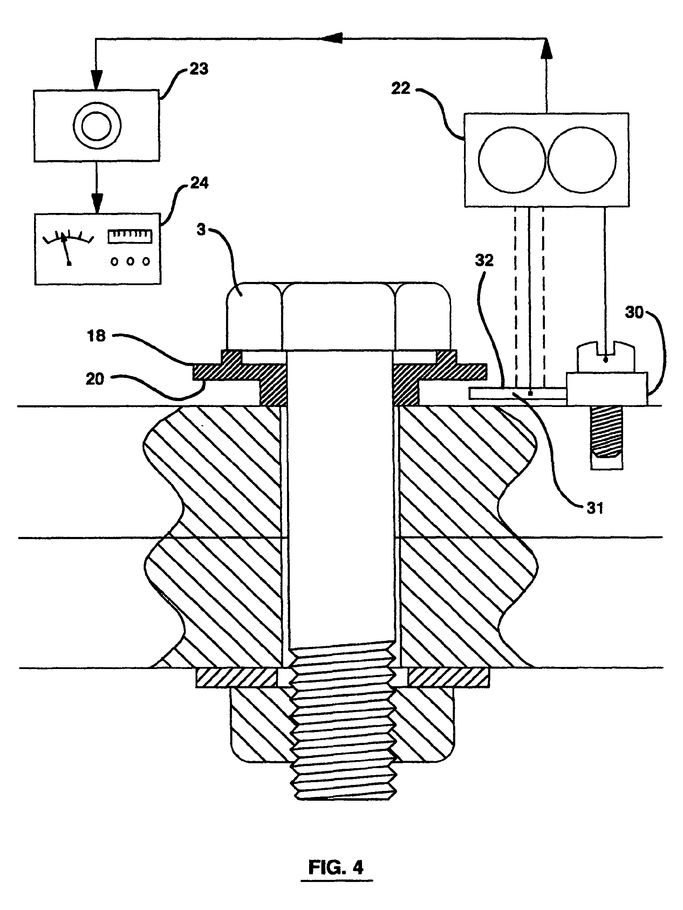

As shown in Fig. 4, the fastener system 1 deflects washer 18 when it is in use. The reactance capacitor 31 measures the gap between the face 32 of the capacitor 31 and the washer 18 surface 20. The system operates as described for Fig. 1.

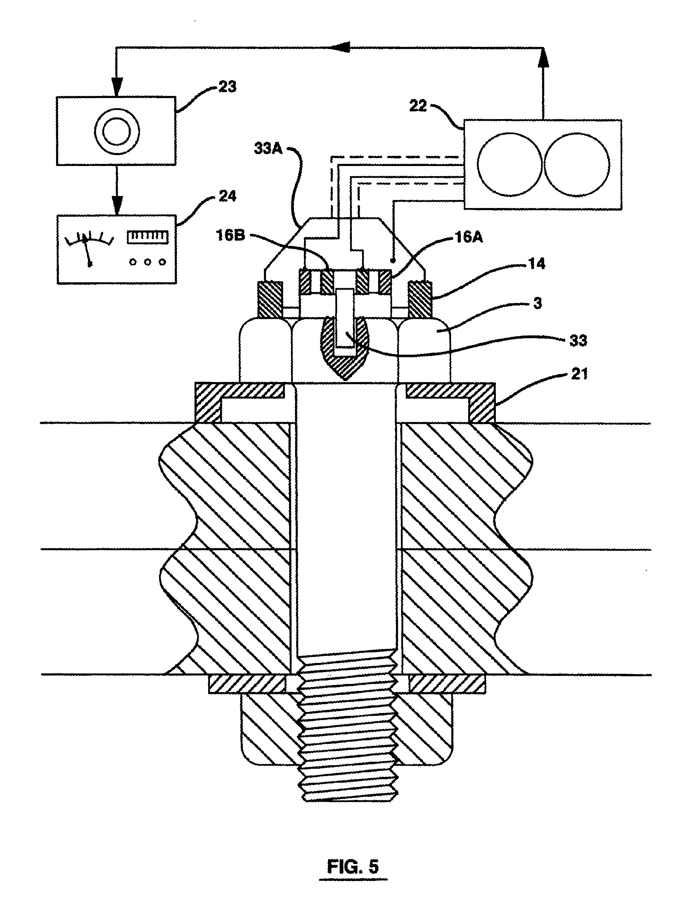

Shown in Fig. 5 is specially designed washer 21 which deflects the head 3 of the bolt and the ring reactance capacitors 16A, 16B, mounted in portable head 33A and located atop the bolt head 3 by location peg 33, compare two parts of the head 3 relative to each other to indicate load. Otherwise the system is as described for Fig. 1.

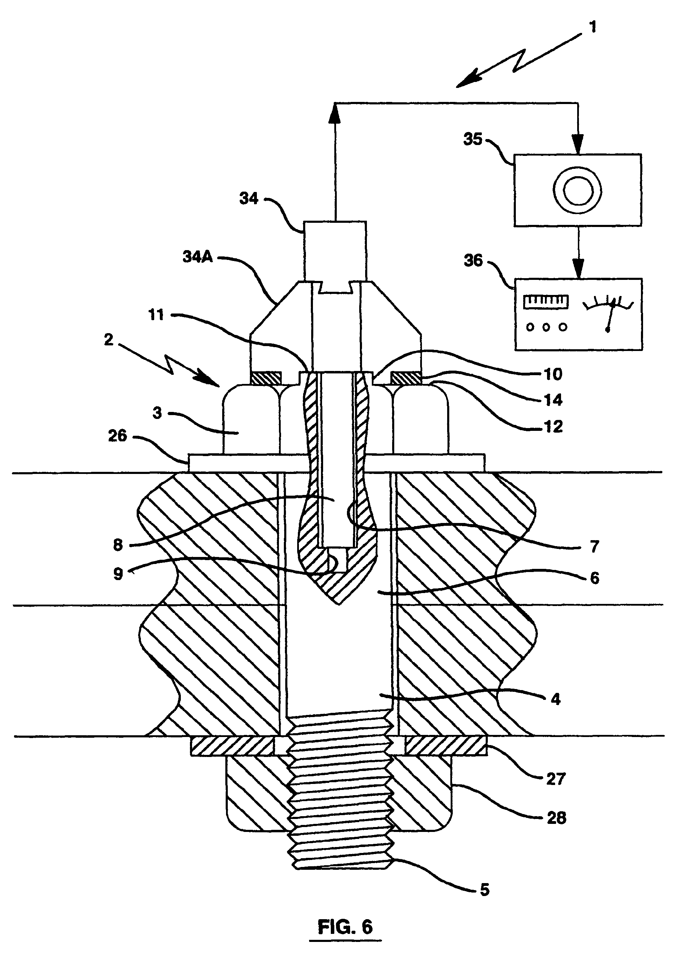

As seen in Fig. 6, which shows a first embodiment of the present invention, the portable head 34A carries the camera or laser 34 which is connected to image processor 35 which is connected to readout 36. Portable head 34A is constructed to accurately locate onto the head 3 locating spigot 10. The portable head 34A is secured to the head 3 by a magnet 14 mounted on the bottom of portable head 34A, or portable head 34A may be secured to head 3 by other known means. The camera or laser system 34, 35 measures the gap between the free end face 8A of the element 8 and the upper datum surface 11 of head 3. The gaps between the datum surface 11 and the free end 8A of the element 8 are compared by the camera or laser system 34, 35 and calibrated to indicate load that the shank 4 is subjected to during its use. The camera 34 can be replaced by a laser 34 and coupled to a processor 35 and to a readout 36 or to a computer (not shown).

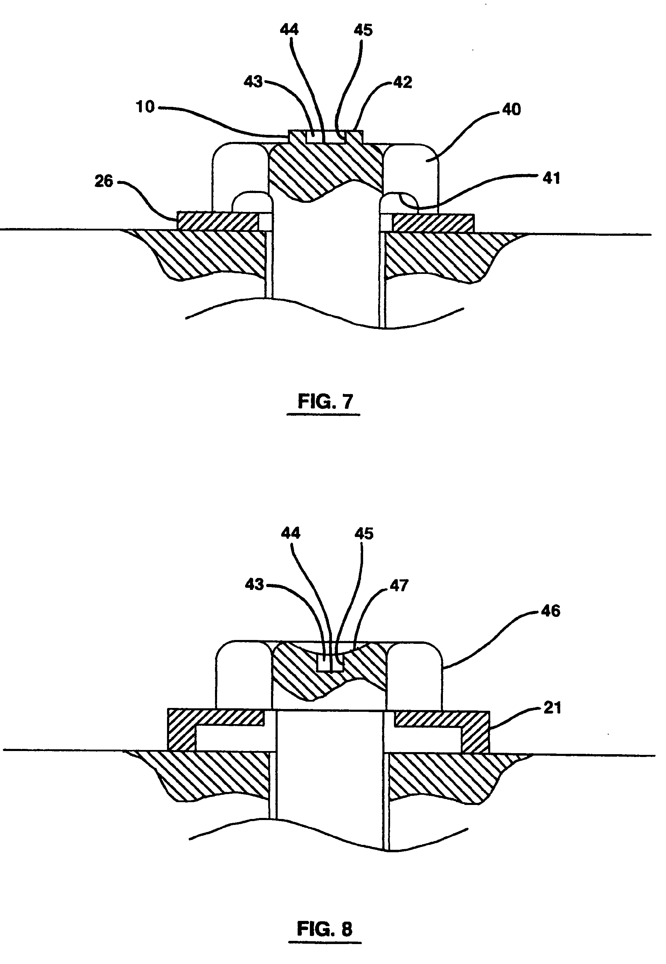

As seen in Fig.7 an alternative option for measuring the fastener head 40 deflection when the system is under load. The specially designed head 40 is shaped with an annular groove 41, a spigot 10 having an annular outer face 42 surrounding a recess 43 having a floor 44 and cylindrical wall 45, and the portable monitor 34A with the camera or laser 34 detects the change in shape of the head when under load. The electronics is calibrated to recognize the load scale from zero to proof load of the material and indicates load induced into the fastener.

Fig. 8 is the same as that described in Fig.7, but a special washer 21 causes the specially designed head 46, having recess 43 with floor 44 and wall 45 and outboard concave face 47, to deflect.

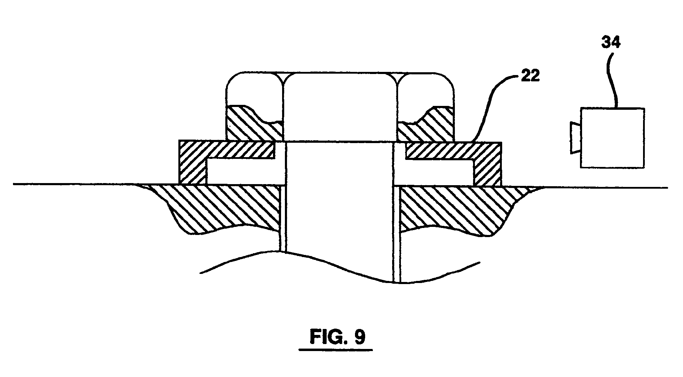

Fig.9 is the same as that described in Fig. 7, but the special washer 22 changing shape due to the fastener system loading up to the material's proof load is detected by either the camera or laser 34 as shown.

The foregoing description of a preferred embodiment and best mode of the invention known to applicant at the time of filing the application has been presented for the purposes of illustration and description. It is not intended to be exhaustive or to limit the invention to the precise form disclosed, and obviously many modifications and variations are possible in the light of the above teaching. The embodiment was chosen and described in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. A load measuring apparatus comprising:

   an externally mounted camera or laser (34) supported in a portable sensing head (34A) and configured and constructed for sensing a changing gap, between, on the one hand, an end face (8A) of a bar (8) in and anchored to a base of a bore (7) in a bolt head (3) and shank (4) of a fastener system (1) and, on the other hand, a datum face (11) of the bolt head (3) of the fastener system (1), caused by longitudinal extension of the shank (4) under strain relative to the datum face (11) on the bolt head (3) without contacting the relatively moving portions of the fastener system (1), **characterized in that** it further comprises a generating circuit responsive to the sensed changing gap for providing an output signal indicative of a clamp load applied to the fastener system (1).

2. Apparatus comprising:

   a fastener (1) including a bolt head (3), having a datum face (11), and a shank (4), a bore (7) extending into the fastener (1) through the bolt head (3) and into the shank (4), a bar (8) disposed in the bore (7) and secured to the fastener (1) and having an end face (8A) located near the datum face (11), and a changing gap that forms between the end face (8A) of the element (8) and the datum face (11) of the bolt head (3) in response to load applied to the fastener (1); and
   an externally mounted camera or laser (15 and 16, 15 and 17, 16A and 16B, or 34) to non-contact sense the gap and **characterized by** further comprising a generating circuit responsive to the sensed changing gap to provide an output signal indicative of load applied to the fastener (1).

3. Apparatus of claim 2, wherein the camera or laser is supported by a portable sensing head removably carried atop the bolt head (3).


## Patentansprüche

1. Eine Lastmessvorrichtung umfassend:

   eine außen befestigte Kamera oder Laser (34), die in einem tragbaren Erfassungskopf (34A) gelagert ist und konfiguriert und konstruiert ist zum Erfassen eines sich verändernden Spalts zwischen einerseits einer Endfläche (8A) eines Stabs (8) in und verankert mit einem Boden eines Bohrlochs (7) in einem Bolzenkopf (3) und Schaft (4) eines Befestigungssystems (1) und andererseits einer Bezugsfläche (11) des Bolzenkopfs (3) des Befestigungssystems (1), der durch Längsausdehnung des Schafts (4) unter Spannung in Bezug auf die Bezugsfläche (11) auf dem Bolzenkopf (3) verursacht wird ohne die sich relativ bewegenden Bereiche des Befestigungssystems (1) zu berühren, **dadurch gekennzeichnet, dass** die Vorrichtung weiterhin umfasst

eine Erzeugungsschaltung, die auf den erfassten sich ändernden Spalt reagiert, um ein Ausgangssignal bereitzustellen, das eine Klemmkraft anzeigt, die auf das Befestigungssystem (1) aufgebracht ist.

**2.** Vorrichtung, umfassend:

einen Befestiger (1) mit einem Bolzenkopf (3), der eine Bezugsfläche (11) aufweist, und mit einem Schaft (4), einem Bohrloch (7), das sich in den Befestiger (1) durch den Bolzenkopf (3) und in den Schaft (4) erstreckt, einen Stab (8), der in dem Bohrloch (7) angeordnet ist und an dem Befestiger (1) angeordnet ist und eine Endfläche (8A) aufweist, die in der Nähe der Bezugsfläche (11) angeordnet ist, sowie einen sich verändernden Spalt, der sich zwischen der Endfläche (8A) des Elements (8) und der Bezugsfläche (11) des Bolzenkopfs (3) als Antwort auf eine an den Befestiger (1) angelegte Last ausbildet; und eine außen befestigte Kamera oder Laser (15 und 16, 15 und 17, 16A und 16B oder 34), um den Spalt ohne Berührung zu erfassen und weiterhin **gekennzeichnet durch** eine Erzeugungsschaltung, die auf den erfassten sich ändernden Spalt reagiert, um ein Ausgangssignal bereitzustellen, das eine an den Befestiger (1) angelegte Last anzeigt.

**3.** Vorrichtung gemäß Anspruch 2, in der die Kamera oder Laser durch einen tragbaren Erfassungskopf unterstützt wird, der abnehmbar oben auf dem Bolzenkopf (3) getragen wird.

## Revendications

**1.** Dispositif mesurant une charge comprenant :

un appareil photographique ou un laser (34) monté extérieurement, supporté dans une tête de détection (34A) portable et configuré et construit pour détecter un écart variable entre, d'une part, une face terminale (8A) d'une barre (8) dans et ancrée à une base d'un alésage (7) dans une tête de boulon (3) et une tige (4) d'un système de fixation (1) et, d'autre part, une face de référence (11) de la tête de boulon (3) du système de fixation (1), causé par l'extension longitudinale de la tige (4) sous contrainte par rapport à la face de référence (11) sur la tête de boulon (3) sans entrer en contact avec les portions du système de fixation (1) se déplaçant relativement, **caractérisé en ce qu'**il comprend en outre

un circuit générateur sensible à l'écart variable détecté pour fournir un signal de sortie indiquant une charge de serrage appliquée au système de fixation (1).

**2.** Dispositif comprenant :

une fixation (1) comprenant une tête de boulon (3), présentant une face de référence (11), et une tige (4), un alésage (7) s'étendant dans la fixation (1) à travers la tête de boulon (3) et dans la tige (4), une barre (8) disposée dans l'alésage (7) et attachée à la fixation (1) et présentant une face terminale (8A) située près de la face de référence (11), et un écart variable qui se forme entre la face terminale (8A) de l'élément (8) et la face de référence (11) de la tête de boulon (3) en réaction à une charge appliquée à la fixation (1) ; et un appareil photographique ou un laser (15 et 16, 15 et 17, 16A et 16B, ou 34) monté extérieurement pour détecter sans contact l'écart et **caractérisé en ce qu'**il comprend en outre un circuit générateur sensible à l'écart variable détecté pour fournir un signal de sortie indiquant une charge appliquée à la fixation (1).

**3.** Dispositif selon la revendication 2, dans lequel l'appareil photographique ou le laser est supporté par une tête de détection portable portée de manière détachable sur la tête de boulon (3).

**FIG. 1**

**FIG. 2**

**FIG. 3**

**FIG. 4**

**FIG. 5**

**FIG. 6**

**FIG. 7**

**FIG. 8**

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5392654 A
- US RE30183 E
- US 3886840 A